# EUROPÄISCHE PATENTANMELDUNG

(11) **EP 4 092 164 A1**
(43) Veröffentlichungstag der Anmeldung: **23.11.2022**
(21) Anmeldenummer: 21174032.9
(22) Anmeldetag: 17.05.2021
(51) Int. Cl.: C25B 9/05, C25B 9/60, H01M 8/00

(54) **DRUCKGERÄT MIT EINER STÜTZSTRUKTURVORRICHTUNG**

(71) Anmelder: Siemens Energy Global GmbH & Co. KG, 81739 München (DE)
(72) Erfinder: Kießlich, Simon, 91052 Erlangen (DE); Spies, Alexander, 95478 Kemnath (DE)

(57) **Zusammenfassung**

Die Erfindung betrifft ein Druckgerät (10) mit einer Stützstrukturvorrichtung (11) für das Druckgerät (10). Die Stützstrukturvorrichtung (11) weist eine Metalleinheit (13) und eine Kunststoffkomponente (12) auf. Die Kunststoffkomponente (12) ist an der Metalleinheit (13) angeordnet, wobei die Metalleinheit (13) und die Kunststoffkomponente (12) zumindest bereichsweise formschlüssig miteinander verbunden sind. Die Kunststoffkomponente (12) und die Metalleinheit (13) sind eingerichtet, eine vorgegebene Belastung (14) des Druckgeräts (10) größtenteils aufzunehmen.

## Beschreibung

Die Erfindung betrifft ein Druckgerät, insbesondere eine elektrochemische Zelle mit einer Stützstrukturvorrichtung.

Der Begriff "Druckgerät" ist durch die Druckgeräterichtlinie definiert. Damit werden allgemein unter Druck stehende Produkte verstanden. Der Begriff des Druckgeräts resultiert aus der dazugehörigen englischen Bezeichnung "pressure equipment". Gemäß der Druckgeräterichtlinie gelten unter anderem folgende Produkte als Druckgerät: Behälter (unbefeuerte Druckbehälter), Dampfkessel, Rohrleitungen, druckhaltende Ausrüstungsteile, Ausrüstungsteile mit Sicherheitsfunktion. Dabei liegt jeweils ein innerer Druck von mehr als 0,5 bar an. Somit bezeichnet der Begriff "Druckgerät" keinen gewöhnlichen Drucker, der Text auf Papier druckt. Drucker wie zum Beispiel Produkte von Canon, Hewlett Packard oder Brother sind demzufolge keine Druckgeräte im Sinne dieser Patentanmeldung. Im Rahmen dieser Patentanmeldungen werden insbesondere elektrochemische Zellen wie zum Beispiel Brennstoffzellen und/oder Elektrolysezellen angesprochen. Der Begriff "Druckgerät" bezieht sich bevorzugt auf die genannten elektrochemischen Zellen.

Druckgeräte wie zum Beispiel Elektrolysezellen, Brennstoffzellen, sonstige galvanische Zellen oder Niedertemperaturwärmetauscher sollen möglichst kostengünstig sein. Zugleich ist gefordert, dass diese Druckgeräte den jeweils erforderlichen Belastungen unbeschadet standhalten können. Bei Anwendungen, in denen bestimmte Druckgeräte-Komponenten flache Abmaße haben, besteht das Bedürfnis, das jeweilige Druckgerät noch kostengünstiger herzustellen. Insbesondere bei niedrigen Drücken kann ein Aufwand für komplexe Metallbauteile deutlich höher sein als beispielsweise für Kunststoff.

Die Druckgeräte müssen häufig Belastungen von 20, 50 oder sogar mehr als 100 bar im Betrieb standhalten können. Aus diesem Grund weisen solche Druckgeräte beispielsweise Metallverstrebungen oder ein metallartiges Gerüst auf, welches diesen Druckgeräten entsprechende Stabilität verleiht. Bei entsprechend größer dimensionierten Druckgeräten wie zum Beispiel Brennstoffzellen, die für Flugzeuge eingesetzt werden sollen, sind entsprechende massive bauliche Komponenten erforderlich, um die in einem bestimmungsgemäßen Betrieb der Brennstoffzelle auftretenden Belastungen aufzunehmen. Dieses Erfordernis, die während eines Betriebs auftretenden Belastungen beziehungsweise Drücke oder Druckkräfte aufzunehmen, stellt zugleich ein Hindernis und einen Kostenfaktor dar. Aus diesem Grund besteht das Bedürfnis, ein stabiles Druckgerät bereitzustellen, welches einfacher herzustellen ist und dabei dennoch die erforderlichen Belastungen aufnehmen kann beziehungsweise diesen Belastungen im Betrieb standhalten kann.

Das US-Patent 6,554,978 B1 betrifft einen Hochdruckelektrolyseur. Der Hochdruckelektrolyseur weist eine Mehrzahl von Elektrolysekammern auf, die in einem Rahmen gehalten werden. Diese Elektrolysekammern sind durch eine Membran getrennt. Elektroden sind an diese Membran angepresst. Elektroden sind elektrisch mit einer Bipolarplatte über ein Metallgewebe verbunden. Auch wenn grundsätzlich ein Rahmen erwähnt wird, der Elektrolysekammern hält, so zeigt diese Druckschrift nicht, dass die in einem bestimmungsgemäßen Betrieb des Hochdruckelektrolyseurs auftretenden Kräfte oder Belastungen durch den Rahmen abgefangen werden. Bezüglich einer Komponente oder einer Struktur, welche dem Hochdruckelektrolyseur Stabilität verleiht, macht das US-Patent keine Angaben.

Eine Aufgabe der Erfindung kann darin gesehen werden, ein stabiles Druckgerät kostengünstig und/oder mit geringerer Komplexität bereitzustellen.

Diese Aufgabe wird gemäß den unabhängigen Ansprüchen dieser Anmeldung gelöst. Sinnvolle Weiterbildungen oder alternative Ausführungsformen sind in den Unteransprüchen, der Beschreibung sowie in den Figuren angegeben.

Die Erfindung sieht ein Druckgerät mit einer Stützstrukturvorrichtung für das Druckgerät vor. Das Druckgerät kann eine elektrochemische Zelle, eine Brennstoffzelle und/oder eine Elektrolysezelle sein. Die Stützstrukturvorrichtung weist eine Metalleinheit auf. Die Metalleinheit kann tragend ausgebildet sein. Somit kann die Metalleinheit als ein Trägerbauteil verwirklicht sein. Die Stützstrukturvorrichtung weist ferner eine Kunststoffkomponente auf, welche an der Metalleinheit angeordnet ist. Insbesondere kann die Kunststoffkomponente unmittelbar an der Metalleinheit angeordnet sein. Die Metalleinheit und die Kunststoffkomponente sind zumindest bereichsweise formschlüssig miteinander verbunden. Damit können die Metalleinheit und die Kunststoffkomponente unmittelbar miteinander in Kontakt stehen.

Die Kunststoffkomponente und die Metalleinheit sind dabei eingerichtet, eine vorgegebene Belastung des Druckgeräts größtenteils aufzunehmen. Die vorgegebene Belastung kann beispielsweise eine von einem Hersteller vorgesehene maximal zulässige Belastung für das Druckgerät sein. Die Belastung kann eine Kraft, ein Druck, eine Spannung und/oder eine Torsion sein. So kann beispielsweise für eine Elektrolysezelle angegeben sein, dass ein maximaler Druck von 200 bar bei einem Betreiben der Elektrolysezelle auftreten kann beziehungsweise zulässig ist. Die Belastung oder von dem Hersteller erlaubte oder vorgesehene Belastung kann auch in Form einer Kraft, Spannung oder Torsion angegeben sein.

Der Ausdruck "formschlüssig miteinander verbunden" beziehungsweise "Formschluss" kommt aus dem Bereich der Verbindungstechnik. Formschlüssige Verbindungen resultieren bevorzugt durch ein Ineinandergreifen von mindestens zwei Komponenten. In diesem Fall sind die zwei Komponenten die Metalleinheit und die Kunststoffkomponente. Bei einer formschlüssigen Verbindung können sich diese beiden Komponenten bevorzugt nicht voneinander lösen. Vereinfacht ausgedrückt ist bei der formschlüssigen Verbindung insbesondere die Metalleinheit der Kunststoffkomponente im Weg beziehungsweise umgekehrt. Somit stellt eine formschlüssige Verbindung insbesondere ein Verhindern einer möglichen Bewegung einer dieser beiden Komponenten relativ zu der anderen dar. Bei einer formschlüssigen Verbindung zwischen der Metalleinheit und der Kunststoffkomponente kann keine dieser beiden Komponenten alleine bewegt werden, ohne dabei die andere Komponente entsprechend mitzubewegen. Der Formschluss beziehungsweise die formschlüssige Verbindung kann als Sperrung aufgefasst werden.

Dabei sind unterschiedliche Möglichkeiten der formschlüssigen Verbindung zwischen der Metalleinheit und der Kunststoffkomponente möglich. So kann die Metalleinheit beispielsweise eine Öffnung aufweisen und die Kunststoffkomponente kann einen zu einem Grundkörper der Kunststoffkomponente senkrecht abstehenden Zapfen aufweisen. Dieser Zapfen kann in der Öffnung der Metalleinheit platziert sein, sodass eine formschlüssige Verbindung hergestellt ist. Aufgrund des Zapfens der Kunststoffkomponente kann in diesem Beispiel die formschlüssige Verbindung realisiert sein. Die Kunststoffkomponente kann in diesem Fall nicht mehr unabhängig von der Metalleinheit bewegt werden.

Die Kunststoffkomponente kann als eine komplexe Kunststoffbauteilgeometrie realisiert sein. Es wird zwar häufig eine rechteckige oder quaderförmige Kunststoffkomponente bevorzugt, jedoch kann die Kunststoffkomponente auch komplexe Strukturen beziehungsweise Geometrien annehmen. Ein wichtiger Aspekt dieser Erfindung liegt darin, dass die Metalleinheit zusammen mit der Kunststoffkomponente die bei dem Druckgerät auftretenden Belastungen größtenteils durch diese beiden Komponenten aufgenommen werden. Idealerweise können nur diese beiden Komponenten Kunststoffkomponente und Metalleinheit diese Belastung aufnehmen. Dementsprechend kann eine aufwendige Stützstruktur beispielsweise in Form eines Metallgerüsts entfallen. Dadurch kann das Druckgerät deutlich kostengünstiger und weniger komplex realisiert werden.

Damit können sich erhebliche Vorteile hinsichtlich größerer Druckgeräte, wie zum Beispiel für Brennstoffzellen im Flugverkehr, ergeben. Solche Brennstoffzellen oder Elektrolysezellen müssen bei einer entsprechenden Leistung entsprechend stabil dimensioniert sein. Wenn zum Beispiel eine Brennstoffzelle mehrere Kilowatt Leistung erbringen soll, ist mit entsprechend hohen Belastungen, also Drücken, beim Betrieb der Brennstoffzelle zu rechnen. Daher benötigt eine solche Brennstoffzelle eine entsprechend stabile Konstruktion beziehungsweise ein entsprechend stabiles Gerüst. Genau an dieser Stelle setzt die Erfindung an. Die Erfindung sieht hier vor, dass die Metalleinheit sowie die Kunststoffkomponente den größten Teil einer solchen Belastung aufnehmen können. Dadurch kann das Druckgerät entsprechend einfacher konzipiert werden beziehungsweise das Druckgerät kann deutlich günstiger hergestellt werden.

Eine zusätzliche oder alternative Ausführungsform sieht vor, dass ausschließlich die Kunststoffkomponente und die Metalleinheit eingerichtet sind, die vorgegebene Belastung des Druckgeräts zu mindestens 85 Prozent aufzunehmen. In diesem Fall wird die vorgegebene Belastung nur durch die Kunststoffkomponente und die Metalleinheit aufgenommen, und dies zu mindestens zu 85 Prozent. Die Metalleinheit und Kunststoffkomponente können auch mehr als 85 Prozent der Belastung aufnehmen, also auch 90, 95, 96, 97, 98, 99 und 100 Prozent. Die vorgegebene Belastung kann beispielsweise 200 bar bei einer entsprechend dimensionierten Elektrolysezelle sein. In diesem Fall gibt der Hersteller beispielsweise an, dass die Elektrolysezelle für Belastungen bis zu 200 bar freigegeben ist. Diese Ausführungsform sieht vor, dass nur die Kunststoffkomponente und die Metalleinheit von diesen 200 bar Maximalbelastung wenigstens 150 bar aufnehmen können. Dies kann bedeuten, dass durch die Metalleinheit und die Kunststoffkomponente ein entsprechender Krafteintrag beziehungsweise Kraftabfluss ermöglicht ist. Dabei ist bevorzugt vorgesehen, dass die Kunststoffkomponente und die Metalleinheit dieser Belastung standhalten, also das Druckgerät zerstörungsfrei und/oder wartungsfrei betrieben werden kann. Weitere Bauteile oder Komponenten zur Stabilisierung oder Stützung des Druckgeräts sind bevorzugt nicht erforderlich. Sie könnten allenfalls noch vorgesehen sein, um Bedenken, insbesondere bei einer Einführung des Druckgeräts, zu zerstreuen.

Zusätzlich oder alternativ kann die Metalleinheit als ebene Metallplatte ausgebildet sein und eine Öffnung aufweisen, in der ein erster Teil der Kunststoffkomponente formschlüssig eingeführt ist. Ein zweiter Teil der Kunststoffkomponente kann unmittelbar auf der Metallplatte angeordnet sein. Ein erster Teil der Kunststoffkomponente kann als Hauptteil betrachtet werden. Dieser Hauptteil kann beispielsweise ein Quader sein. Der zweite Teil kann senkrecht zu diesem Quader abstehen. Dieser senkrecht abstehende zweite Teil kann beispielsweise ein Zapfen sein. Dieser Zapfen ist bevorzugt in die Öffnung der Metallplatte eingeführt beziehungsweise in diese Öffnung hineingesteckt. Dabei liegt bevorzugt der erste Teil der Kunststoffkomponente unmittelbar auf der Metallplatte auf beziehungsweise ist auf der Metallplatte angeordnet.

Beispielsweise kann die Kunststoffkomponente T-förmig ausgebildet sein. Der horizontale Teil würde den ersten Teil repräsentieren, während der senkrechte Teil der T-förmigen Kunststoffkomponente den zweiten Teil der Kunststoffkomponente, insbesondere den Zapfen, darstellt. Mithilfe des senkrechten Teils beziehungsweise des Zapfens kann ein Kraftübertrag auf die Metallplatte erfolgen. Die Metallplatte kann ein Trägerbauteil in Form eines Blechs sein. Dadurch kann auf einfache Weise die Kunststoffkomponente mit der Metallplatte formschlüssig verbunden werden.

Zusätzlich oder alternativ kann vorgesehen sein, dass die Metalleinheit L-förmig, U-förmig, wannenförmig und/oder Z-förmig ausgebildet ist und die Kunststoffkomponente mit der Metallplatte die formschlüssige Verbindung bildet. Die Metalleinheit kann somit ein L-Profil, U-Profil, Wannenprofil und/oder Z-Profil aufweisen. Ebenfalls ist eine Kombination dieser möglichen Formen für die Metalleinheit möglich. Die Kunststoffkomponente ist bevorzugt derart in oder an der Metalleinheit angeordnet, dass eine Bewegung in wenigstens einer Richtung parallel zu einer Grundfläche der Metalleinheit oder Metallplatte verhindert wird. Die Grundfläche der Metalleinheit ist bevorzugt eine ebene Auflagefläche, auf der die Kunststoffkomponente platzierbar ist. Bei einem U-förmigen Profil kann die Kunststoffkomponente zwischen den beiden abstehenden Schenkeln des "Us" platziert werden. In diesem Fall kann die formschlüssige Verbindung durch einen unmittelbaren Kontakt wenigstens eines U-Schenkels mit der Kunststoffkomponente realisiert sein. Ebenso können zwei Seitenflächen der Kunststoffkomponente unmittelbaren Kontakt mit dem U-Profil haben. In diesem Fall ist die Metalleinheit keine reine ebene Metallplatte, sondern weist eine entsprechende Umformung auf. Bei einem L-Profil beispielsweise kann ein Teil der Metallplatte senkrecht zu der Grundfläche der Metallplatte verbogen sein. Bei einer entsprechenden Krafteinwirkung auf die Kunststoffkomponente kann eine Kraftübernahme beziehungsweise Krafteinleitung über die Umformung in der Metallplatte erfolgen.

Zusätzlich oder alternativ kann die Metalleinheit mindestens eine zu einer ebenen Grundfläche der Metalleinheit im Wesentlichen senkrechte Erhebung aufweisen. Die im Wesentlichen senkrechte Erhebung kann insbesondere einen Winkel von 75 bis 110 Grad umfassen. Dies bedeutet, dass die Erhebung mit der ebenen Grundfläche einen Winkel zwischen 75, 80, 85, 90, 95, 100, 105 oder 110 Grad einnehmen kann. Die Kunststoffkomponente ist in diesem Beispiel an der im Wesentlichen senkrechten Erhebung unmittelbar angeordnet. Dies bedeutet, dass die Kunststoffkomponente mit der senkrechten Erhebung der Metalleinheit kontaktiert sein kann. Die formschlüssige Verbindung kann insbesondere durch einen wirkenden Druck oder eine Krafteinwirkung hergestellt sein.

Zusätzlich oder alternativ kann die Metalleinheit als Metallplatte ausgebildet sein und bereichsweise eine Wölbung oder bereichsweise eine Ausnehmung senkrecht zu der Metallplatte aufweisen. Bevorzugt wird von einer Wölbung gesprochen, wenn es sich um eine rundliche Erhebung handelt. Es ist jedoch auch möglich, dass die Wölbung geradlinig ist und dabei im Wesentlichen senkrecht zu der Grundfläche angeordnet ist. Dies würde eher zum Beispiel einem L-Profil entsprechen. Die Kunststoffkomponente kann eine zu der Metallplatte korrespondierende bereichsweise Ausnehmung oder Wölbung aufweisen und durch die bereichsweise Ausnehmung oder Wölbung ist die Kunststoffkomponente formschlüssig mit der Metallplatte verbunden. Dies gilt insbesondere bei einer entsprechenden Kraft- oder Druckeinwirkung auf die Kunststoffkomponente.

Die Wölbung beziehungsweise Ausnehmung kann rundlich ausgebildet sein. Diese Wölbungen oder Ausnehmungen können auch als Sicke betrachtet werden. Sicken sind insbesondere rinnenförmige Vertiefungen. Sie dienen häufig einer Versteifung von dünnwandigen Bauteilen gegenüber Verformung oder Schwingungen. Ein plastisch verformbares Material getriebene Sicken können als "Verprägung" bezeichnet werden. Scharfkantige Sicken können als Falz bezeichnet werden. Eine vertiefte Seite einer Sicke kann als Nut bezeichnet werden. Eine erhabene Seite der Sicke wird oft als Rippe oder Grat bezeichnet. Die Sicke kann eine wellenförmige Erhebung beziehungsweise Ausnehmung der Metallplatte oder der Kunststoffkomponente bedeuten. Wichtig ist in diesem Beispiel, dass die Wölbung der Metallplatte weitgehend korrespondierend zu der Ausnehmung der Kunststoffkomponente ausgebildet ist. So können diese beiden Komponenten idealerweise ineinandergreifen und so eine formschlüssige Verbindung ermöglichen. Dies gilt insbesondere bei einer entsprechenden Druck- oder Krafteinwirkung auf die Kunststoffkomponente. In diesem Beispiel kann eine Kraftübergabe auf eine Sicke in der Metallplatte und/oder der Kunststoffkomponente erfolgen.

Die vorangegangenen Beispiele beschreiben verschiedene Möglichkeiten, wie eine formschlüssige Verbindung realisiert sein kann. Die formschlüssige Verbindung kann mithilfe von Nuten oder Schrauben realisiert sein. Insbesondere kann aber die formschlüssige Verbindung nur anhand der Kunststoffkomponente und der Metalleinheit ohne weitere Komponenten realisiert sein. Somit können die Kunststoffkomponente und die Metalleinheit so aneinander angeordnet sein, dass bei entsprechender Druck- oder Krafteinwirkung auf die Metallplatte oder Kunststoffkomponente die formschlüssige Verbindung realisiert ist.

Zusätzlich oder alternativ kann die Kunststoffkomponente im Wesentlichen rechteckig oder quaderförmig ausgebildet sein. Bevorzugt weist die Kunststoffkomponente eine Art Sägegeometrie auf. Eine Sägegeometrie ist insbesondere eine geometrische Form, welche sich mithilfe einer Säge wie zum Beispiel einer Kreissäge realisieren lässt. So kann die Kunststoffkomponente beispielsweise pyramidenförmig sein. Insbesondere können die Kunststoffkomponente und die Metalleinheit geometrisch so aufeinander abgestimmt sein, dass eine Steckverbindung zwischen Kunststoffkomponente und Metalleinheit ermöglicht wird. Die formschlüssige Verbindung zwischen Kunststoffkomponente und Metalleinheit kann auch als Hybridbauteil bezeichnet werden. Mithilfe von rechteckigen oder quaderförmigen Kunststoffkomponenten können hohe Belastungen beziehungsweise starke Kräfte aufgenommen werden. So kann eine besonders stabile Brennstoffzelle oder ein besonders stabiles Druckgerät geschaffen werden.

Zusätzlich oder alternativ kann die Kunststoffkomponente aus glasfaserverstärktem Kunststoff und/oder aus gespritztem Kunststoff gefertigt sein. Dabei hat die Kunststoffkomponente zusätzlich den Vorteil, dass eine elektrische Isolierung ermöglicht wird. Damit können beispielsweise mehrere Zellen in einer Elektrolysezelle oder Brennstoffzelle voneinander elektrisch isoliert werden. Bei einer Verwendung von gespritztem Kunststoff können einfache Fertigungsprozesse kostengünstig realisiert werden. In diesem Fall können hohe Stückzahlen günstig und effizient gefertigt werden.

Zusätzlich oder alternativ kann die Metalleinheit Edelstahl, Blech, Stahl und/oder Karbon aufweisen. Die Metalleinheit kann als Trägerbauteil für die Kunststoffkomponente ausgebildet sein. Das Blech kann ein Kupferblech oder Aluminiumblech sein. In diesem Fall trägt die Metalleinheit die Kunststoffkomponente. Damit kann eine Hybridbauweise geschaffen werden, welche die hohen Belastungen beim Betrieb des Druckgeräts aufnehmen kann. Aufgebrachte Druckkräfte auf die Kunststoffkomponente oder Metalleinheit werden insbesondere durch den realisierten Formschluss auf die Metalleinheit umgeleitet und von diesen getragen.

Zusätzlich oder alternativ ist vorgesehen, dass das Druckgerät als eine Elektrolysezelle ausgebildet ist. Eine Elektrolyse ist eine Bezeichnung für einen chemischen Prozess, bei dem elektrischer Strom eine Redoxreaktion erzwingt. Sie wird bevorzugt zur Gewinnung von Metallen verwendet oder zur Herstellung von Stoffen, deren Gewinnung durch chemische Prozesse teurer oder kaum möglich wäre. Beispiele wichtiger Elektrolysen sind die Gewinnung von Wasserstoff, Aluminium, Chlor und Natronlauge. Somit kann eine Verwendung des Druckgeräts in Form einer Elektrolysezelle zur Produktion von Wasserstoff erfolgen. Die vorliegende Erfindung wird bevorzugt im Rahmen einer Wasserstoffelektrolyse eingesetzt. In diesem Fall wird Wasser (H₂O) in die beiden Gase Sauerstoff und Wasserstoff aufgespalten. Dies erfolgt dabei unter Einsatz von Energie. Vereinfacht ausgedrückt kann eine Elektrolyse als rückwärts gerichtete Knallgasreaktion betrachtet werden. Beispielsweise kann überschüssiger Strom, der beispielsweise im Rahmen von erneuerbaren Energien vorhanden ist, für die Elektrolyse, also die Gewinnung von Wasserstoff, eingesetzt werden. Je nach Dimensionierung der Elektrolysezellen müssen diese entsprechenden Belastungen aushalten können. An diesem Punkt setzt die Erfindung an. Mithilfe der vorgeschlagenen Hybridbauweise, die durch die Stützstrukturvorrichtung aus Metalleinheit und Kunststoffkomponente realisiert ist, kann die Elektrolysezelle weniger komplex, kostengünstig, aber dennoch stabil und robust hergestellt werden.

Insbesondere kann zusätzlich oder alternativ vorgesehen sein, dass die Kunststoffkomponente und die Metallkomponente eingerichtet sind, eine Belastung von mindestens 30 bar aufzunehmen. Hochleistungsfähige Elektrolysezellen produzieren entsprechende Wasserstoff- und Sauerstoffgase. Dabei kann es in der Elektrolysezelle an bestimmten Zellen zu erhöhten Drücken kommen. Die Elektrolysezellen können beispielsweise Wasserstoff mit einem Druck von 15 bar oder mehr produzieren. Aufgrund dieses Überdrucks kommt es im Inneren der Elektrolysezelle zu einer entsprechenden Krafteinwirkung, die entsprechend kompensiert werden muss. Die dabei auftretenden Kräfte werden insbesondere ausschließlich durch die Hybridbauweise der Stützstrukturvorrichtung aus Kunststoffkomponente und Metalleinheit aufgefangen. Die bereits erwähnten Vorteile und Beispiele gelten sinngemäß für unterschiedliche Druckgeräte. Ebenso können Aspekte und Vorteile der vorgenannten Ausführungsformen auf die Elektrolysezelle und/oder Brennstoffzelle übertragen werden.

Die Erfindung wird nun anhand der beigefügten Zeichnungen näher erläutert. Dabei ist zu beachten, dass die in den Zeichnungen dargestellten Ausführungsbeispiele in erster Linie der Erläuterung der Erfindung dienen. Sie sollen jedoch die Erfindung nicht einschränken.

Dabei zeigt:
- FIG 1: eine Schnittansicht auf die Stützstrukturvorrichtung, bei der die Metallplatte eine Öffnung aufweist;
- FIG 2: eine Schnittansicht auf die Stützstrukturvorrichtung, bei der die Metalleinheit ein L-Profil aufweist;
- FIG 3: eine Schnittansicht auf die Stützstrukturvorrichtung, wobei die Kunststoffkomponente und die Metalleinheit jeweils eine korrespondierende Sicke aufweisen;
- FIG 4: ein erstes Beispiel für ein Druckgerät;
- FIG 5: ein zweites Beispiel für ein Druckgerät;
- FIG 6: ein drittes Beispiel für ein Druckgerät.

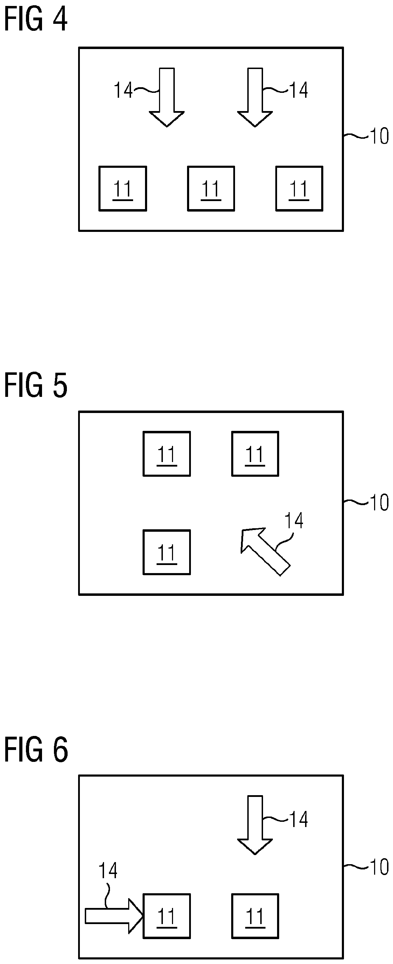

In FIG 4, FIG 5 und FIG 6 sind drei mögliche Beispiele für ein Druckgerät 10 mit einer jeweils wirkenden Belastung 14 gezeigt. Die Belastung 14 kann in Form als Druck, Kraft, Spannung und/oder Torsion realisiert sein. Innerhalb dieser Druckgeräte 10 sind jeweils mehrere Stützstrukturvorrichtungen 11 angedeutet. Wie die FIG 4, FIG 5 und FIG 6 zeigen, kann die Belastung 14 aus unterschiedlichen Richtungen an die Stützstrukturvorrichtungen 11 anliegen.

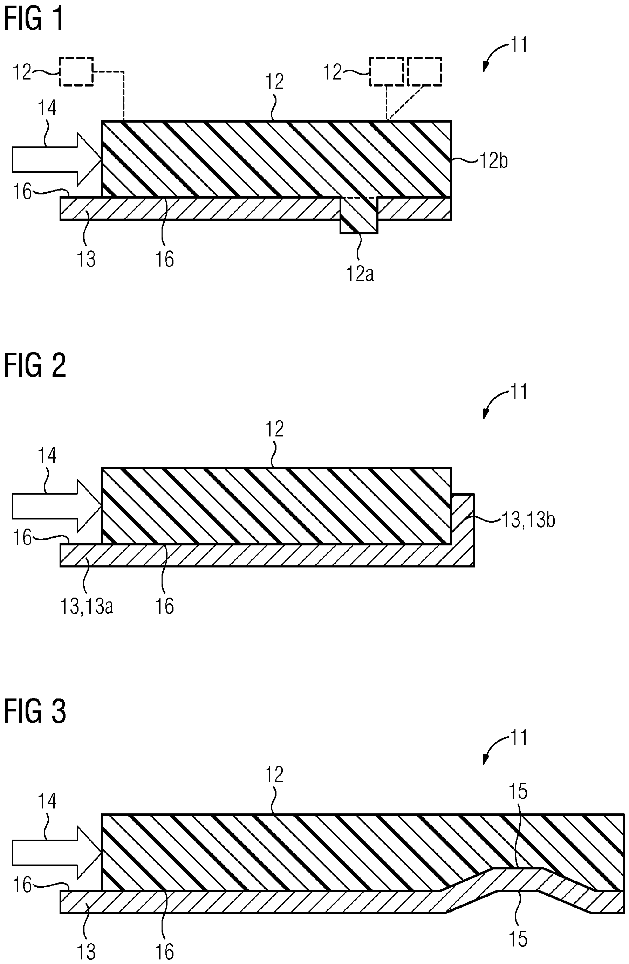

Die Stützstrukturvorrichtung 11 beinhaltet insbesondere eine Kunststoffkomponente 12 sowie eine Metalleinheit 13. Die Kunststoffkomponente 12 kann mehrere Teile aufweisen. So ist in FIG 1 beispielhaft ein erster Teil 12a der Kunststoffkomponente 12 als Zapfen 12a angedeutet. Dieser Zapfen 12a ist in eine Öffnung der Metalleinheit 13 eingeführt. Im Beispiel von FIG 1 ist die Metallplatte 13 als ebenes Metallblech ausgeführt. Die ebene Metallplatte 13 besitzt eine ebene Grundfläche 16, auf der ein Großteil der Kunststoffkomponente 12 angeordnet ist. Bevorzugt ist ein zweiter Teil 12b der Kunststoffkomponente 12 unmittelbar auf der Grundfläche 16 der Metallplatte 13 angeordnet. Der Zapfen 12a ist bevorzugt formschlüssig in die korrespondierende Öffnung der Metallplatte 13 eingeführt.

Bei Anliegen der Belastung 14 kann die Kunststoffkomponente 12 sich nicht unabhängig von der Metallplatte 13 bewegen. Somit kann durch eine Belastung 14 die formschlüssige Verbindung hergestellt sein. Die Belastung 14 kann insbesondere eine vorgegebene Maximalbelastung sein. Die vorgegebene Maximalbelastung kann beispielsweise herstellerseitig angegeben sein. Sie kann zum Beispiel angeben, bis zu welcher Belastung 14 der Stützstrukturvorrichtung 11 das Druckgerät 10 zugelassen ist. Die Belastung 14 kann beispielsweise 30, 40, 50 bar oder auch mehr sein.

In FIG 1 ist oberhalb der Kunststoffkomponente 12 gestrichelt eine Fortsetzung der Kunststoffkomponente 12 angedeutet. Damit soll verdeutlicht werden, dass die Kunststoffkomponente 12 eine komplexe Kunststoffbauteilgeometrie darstellen kann. Die komplexe Kunststoffbauteilgeometrie kann somit als eine Art Gerüst für das Druckgerät 10 angesehen werden. Aufgrund des Zapfens 12a in der entsprechenden Öffnung der Metallplatte 13 wird eine Kraft auf die Metalleinheit 13 übergeben beziehungsweise dorthin geleitet.

Eine weitere Möglichkeit, eine formschlüssige Verbindung zwischen der Kunststoffkomponente 12 und der Metalleinheit 13 zu realisieren, zeigt die FIG 2. Im Fall von FIG 2 ist die Metalleinheit 13 L-förmig ausgebildet. Die Kunststoffkomponente 12 kann unmittelbar auf der Grundfläche 16 der Metallplatte 13 angeordnet sein. Zugleich weist die Metallplatte 13 einen zweiten Teil 13b auf. Dieser zweite Teil 13b der Metallplatte 13 steht senkrecht zu der Grundfläche 16 der Metallplatte 13. Der erste Teil 13a der Metallplatte 13 entspricht bei dem L-Profil der Grundfläche 16. Im Falle einer Belastung 14 durch Druck oder Kraft wird die Kunststoffkomponente 12 an eine Oberfläche des zweiten Teils 13b der L-förmigen Metallplatte 13 gedrückt. Somit kann eine formschlüssige Verbindung realisiert werden. Zusätzlich oder alternativ kann die Kunststoffkomponente 12 mittels von Schrauben oder Nuten an der Metalleinheit 13 befestigt sein.

Eine weitere Möglichkeit einer formschlüssigen Verbindung zwischen der Kunststoffkomponente 12 und der Metalleinheit 13 zeigt die FIG 3. Hier ist zu erkennen, dass die Metallplatte 13 eine Wölbung 15 aufweist. Die Kunststoffkomponente 12 weist eine dazu korrespondierende Ausnehmung 15 auf. Die Wölbung 15 der Metallplatte 13 sowie die Ausnehmung 15 der Kunststoffkomponente 12 sind dabei idealerweise passgenau aufeinander abgestimmt, sodass diese beiden Komponenten eine formschlüssige Verbindung bilden können. Im Falle der Krafteinwirkung 14, welche in FIG 3 links angedeutet ist, verhindert die durch die Wölbung 15 und Ausnehmung 15 realisierte formschlüssige Verbindung eine relative Bewegung dieser beiden Komponenten zueinander. Die Krafteinwirkung 14 kann durch einen Druck entstehen. Die Wölbung 15 und Ausnehmung 15 können jeweils als Sicke betrachtet werden. Die Sicke 15 kann kreisförmig beziehungsweise rund ausgebildet sein. Im Beispiel von FIG 3 ist die Ausnehmung 15 tendenziell eher eckig und als Falz ausgebildet. Im Falle einer kontinuierlich rund verlaufenden Wölbung würde man eher von einer Sicke sprechen.

In Applikationen, bei welchen Komponenten von Druckgeräten 10 flache Abmaße haben, ist eine kostengünstige Fertigung erwünscht. Im Zuge einer Energiewende sollen vermehrt erneuerbare Energien genutzt werden. Dabei spielen auch Speichertechnologien eine wichtige Rolle. So ist es häufig erforderlich, dass überschüssige Energie gespeichert wird. Eine derartige Speicherung von überschüssiger Energie ist beispielsweise mithilfe von Elektrolysezellen möglich. Bei entsprechender Dimensionierung dieser Elektrolysezellen ist zugleich mit einer entsprechend hohen Belastung dieser Elektrolysezellen zu rechnen. Mithilfe der in den FIG 1 bis 3 dargestellten Hybridbauweise durch die Kunststoffkomponente 12 und die Metalleinheit 13 kann die Elektrolysezelle 10 deutlich kostengünstiger und zugleich robust genug hergestellt werden. Damit können entsprechend leistungsfähige Elektrolysezellen erzeugt werden, welche deutlich günstiger sind als bisherige Elektrolysezellen, welche häufig weitere zusätzliche Komponenten für die mechanische Stabilität aufweisen. Diese weiteren zusätzlichen Komponenten können durch die hier dargestellte Hybridbauweise im Idealfall gänzlich entfallen.

Vor allem bei niedrigen Drücken ist ein Aufwand für komplexe Metallbauteile deutlich höher als zum Beispiel bei Kunststoff, was hier einen hohen Kostenhub schaffen würde. Besonders bei sich oft wiederholenden Bauteilen wie zum Beispiel bei gestapelten Zellen eines Druckgeräts 10 können durch Massenfertigung die spezifischen Kosten massiv gesenkt werden. Im Gegensatz dazu würden komplexe Metallbauteile, die gefräst oder geätzt werden, einen deutlich erhöhten finanziellen Aufwand bedeuten. Dieser finanzielle Mehraufwand kann mithilfe dieser hier vorgeschlagenen Hybridbauweise deutlich reduziert werden.

Falls eine elektrische Isolation nötig ist, kann mithilfe dieser Hybridbauweise diese elektrische Isolation zusätzlich ohne weitere Komponenten realisiert werden. Andere Elektrolysezellen benötigen hierbei zusätzliche Bauteile. Herkömmliche Druckgeräte beinhalten oft ebenfalls Kunststoffbauteile, jedoch sind dabei oft massive Wandstärken vonnöten, um eine entsprechende Stabilität zu erreichen. Mithilfe der hier vorgeschlagenen Hybridbauweise kann mit einfachen Trägerbauteilen in Verbindung mit der Kunststoffkomponente 12 die geforderte Stabilität oder Robustheit des Druckgeräts 10 erreicht werden.

Die Metalleinheit 13 kann als einfaches Trägerbauteil wie zum Beispiel als Blech oder CFK-Platte realisiert sein. Das hier vorgestellte Druckgerät 10 ermöglicht Dank der Hybridbauweise der Stützstrukturvorrichtung 11 eine verbesserte Konstruktion mit einem deutlich geringeren wirtschaftlichen Aufwand. Dieser Vorteil schlägt sich insbesondere bei hohen Stückzahlen positiv zu Buche. Zugleich ermöglicht die Kunststoffkomponente 12, dass in vielen Fällen keine zusätzlichen Bauteile benötigt werden, falls eine elektrische Isolation nötig ist.

## Patentansprüche

1. Druckgerät (10), insbesondere eine elektrochemische Zelle (10) mit:
- einer Stützstrukturvorrichtung (11) für das Druckgerät (10) aufweisend:
- eine Metalleinheit (13, 13a, 13b) und
- eine Kunststoffkomponente (12, 12a, 12b), welche an der Metalleinheit (13) angeordnet ist, wobei die Metalleinheit (13) und die Kunststoffkomponente (12) zumindest bereichsweise formschlüssig miteinander verbunden sind und,
- die Kunststoffkomponente (12) und die Metalleinheit (13) eingerichtet sind, eine vorgegebene Belastung (14) des Druckgeräts (10) größtenteils aufzunehmen.

2. Druckgerät (10) nach Anspruch 1, wobei ausschließlich die Kunststoffkomponente (12) und die Metalleinheit (13) eingerichtet sind, die vorgegebene Belastung (14) des Druckgeräts (10) zu mindestens 75 % aufzunehmen.

3. Druckgerät (10) nach einem der vorhergehenden Ansprüche, wobei
- die Metalleinheit (13) als ebene Metallplatte (13) ausgebildet ist und eine Öffnung aufweist, in der ein erster Teil (12a) der Kunststoffkomponente formschlüssig eingeführt ist und ein zweiter Teil (12b) der Kunststoffkomponente unmittelbar auf der Metallplatte (13) angeordnet ist.

4. Druckgerät (10) nach einem der vorhergehenden Ansprüche, wobei die Metalleinheit (13) L-förmig, U-förmig, wannenförmig und/oder Z-förmig ausgebildet ist und die Kunststoffkomponente (12) mit der Metallplatte die formschlüssige Verbindung bildet.

5. Druckgerät (10) nach Anspruch 4, wobei die Metalleinheit (13) mindestens eine zu einer ebenen Grundfläche (16) der Metalleinheit (13) im Wesentlichen senkrechte Erhebung (13b) aufweist und die Kunststoffkomponente (12) an der im Wesentlichen senkrechten Erhebung (13b) unmittelbar angeordnet ist.

6. Druckgerät (10) nach einem der vorhergehenden Ansprüche, wobei die Metalleinheit (13) eine Metallplatte ist und eine bereichsweise Wölbung (15) oder bereichsweise Ausnehmung (15) senkrecht zur Metallplatte aufweist, die Kunststoffkomponente (12) eine zur Metallplatte (13) korrespondierende bereichsweise Ausnehmung (15) oder Wölbung (15) aufweist und durch die bereichsweise Ausnehmung (15) oder Wölbung (15) die Metallplatte (13) mit der Kunststoffkomponente (12) formschlüssig verbunden ist.

7. Druckgerät (10) nach einem der vorhergehenden Ansprüche, wobei die Kunststoffkomponente (12) im Wesentlichen rechteckig oder quaderförmig ausgebildet ist.

8. Druckgerät (10) nach einem der vorhergehenden Ansprüche, wobei die Kunststoffkomponente (12) aus glasfaserverstärktem Kunststoff und/oder aus gespritztem Kunststoff gefertigt ist.

9. Druckgerät (10) nach einem der vorhergehenden Ansprüche, wobei die Metalleinheit (13) Edelstahl, Blech, Stahl und/oder Carbon aufweist.

10. Druckgerät (10) nach einem der vorhergehenden Ansprüche wobei das Druckgerät (10) als eine Elektrolysezelle ausgebildet ist.

11. Druckgerät (10) nach einem der vorhergehenden Ansprüche, wobei die Kunststoffkomponente (12) und die Metalleinheit (13) eingerichtet sind, eine Belastung (14) von mindestens 30 bar aufzunehmen.
